# EUROPEAN PATENT APPLICATION

(11) **EP 4 625 841 A1**
(43) Date of publication of application: **01.10.2025**
(21) Application number: 25165126.1
(22) Date of filing: 20.03.2025
(51) Int. Cl.: H04B 7/185

(54) **BARRIER MOUNTED SATELLITE TERMINAL SYSTEM**

(30) Priority: 28.03.2024 US 202418620552
(71) Applicant: T-Mobile USA, Inc., Bellevue, WA 98006-1350 (US)
(72) Inventor: AU, Chad, Bellevue, 98006 (US)
(74) Representative: Suddaby, Mark Edward

(57) **Abstract**

A barrier mounted satellite gateway or terminal having an indoor unit to communicate with user equipment within a physical structure and an outdoor unit configured to communicate with one or more satellites. The indoor unit and outdoor unit may, respectively, be applied to the interior and exterior panes of a transparent or translucent barrier, e.g., a window, of the structure. The indoor and outdoor units may be in optical communication with each other via optical signals transmitted through the transparent or translucent barrier.

## Description

### BACKGROUND

High-speed internet service is a common service used by many households to access all things on-line. Today many mobile network operators provide wireless high-speed internet service to their customers. This service can be targeted towards urban or suburban dwellers since cellular network capacity and density currently can support such usage in those areas in many cases. Thus, wireless high-speed internet service is becoming ever more popular as an alternative to the traditional cable or fiber-to-the-premises (FTTP) options due to, for example, its convenience of installation. However, in addition to those who live in the more densely populated locations, there is a significant part of the population who inhabit remote locales that are under-served or unserved by terrestrial (wireless) networks.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIGs. 1A and 1B are example block diagrams of an architecture for a barrier mounted satellite terminal system, according to some implementations.
FIGs. 2A and 2B are additional example block diagrams of an architecture for a barrier mounted satellite terminal system, according to some implementations.
FIG. 3 is a flow diagram illustrating an example process associated with receiving data from one or more satellites, according to some implementations.
FIG. 4 is a flow diagram illustrating an example process associated with sending data to one or more satellites, according to some implementations.
FIG. 5 is a flow diagram illustrating an example process associated with configuring or installing the window mounted satellite terminal system according to some implementations.

### DETAILED DESCRIPTION

Described herein is a barrier mounted satellite gateway or barrier mounted satellite terminal. For example, a barrier may be a transparent or translucent barrier such as a window. A barrier mounted satellite gateway, also referred to as customer premises equipment, is designed to mitigate indoor propagation losses. This is a new style of customer premises equipment whose performance is based on satellite (radio frequency (RF)) wireless signals to provide high speed internet services as opposed to using wireless signals from wireless communication networks to provide high speed internet services. One of the obstacles in providing satellite internet service to customers is the complexity of installing the user terminal equipment, which usually requires drilling holes and running cables through walls in order that information to/from satellites may be communicated. Therefore, tools and some technical skills are required, whether provided by the service provider, or the customer himself/herself, to get the service up and running.

A more user-friendly approach for customers to adopt satellite high speed internet (HSI) service without the need for technical skill, tools, or modification to one's home for equipment setup is a terminal design that exploits the optical nature of the barriers, e.g., transparent or translucent barriers such as windows, for transmitting user data by optical means, as well as wireless coupling DC power through the glass of the window. The examples and configurations described herein are described with respect to windows. However, it should be noted that other barriers that are transparent or translucent and allow optical signals to pass therethrough may be used in place of windows.

Assuming a prerequisite of having a clear unobstructed view of the sky for receiving satellite signals is met, the Window Mounted Satellite Terminal (WMST) consists of an outdoor unit mounted on the outer surface of the window glass, which is tethered via a cable containing electrical power and data elements to a remote antenna module, with a complementary indoor unit positioned on the opposite side of the glass. No physical penetration of the glass or wall is required. The outdoor unit and antenna module operate by wirelessly coupling power from the indoor unit.

The remote antenna module may be in an elevated position by attaching to exterior structural elements such as roof gutters or decking with a spring-loaded or banded clamp having hand-tightened fasteners and/or latches, which can also avoid the need for tools or structural modifications.

The WMST also has an associated app that can run on any smartphone (or other computing device such as, for example, a table, a laptop computer, a desktop computer, etc.) to provide the user with information, such as WMST guidance installation and optimization, performance statistics, and operational status of the WMST.

In addition to enabling the delivery of satellite high speed internet services to users at the under-served or coverage-challenged rural locations, the WMST can also incorporate interfaces at an auxiliary unit to support other appliances, such as cameras, sensors, as well as Internet-of-Things (IoT) devices.

When deployed widely in urban or suburban environment, the WMST can also expand its functionality by hosting network-to-device topology by facilitating device-to-device communication.

A concern with mobile network internet services is that customers may experience a degradation of service when in an indoor environment. For instance, structures and walls of a building or home may often attenuate radio signals as the radio signals propagate or pass through. In some cases, customers may deploy outdoor radio frequency repeaters to amplify the radio signals to compensate for the expected attenuation. The outdoor repeater, while emitting an amplified signal, also creates interference for those outdoor users operating on the same frequency. Unfortunately, the radio frequency repeaters often retransmit entire frequency bands and can cause interference with a desired spectrum associated with wireless internet services, thereby reducing reception in outdoor environments. In this manner, the customer often has to choose between poor indoor service or poor outdoor services with respect to their properties. In another instance, the repeater may be placed indoors. However, the indoor signal's quality will have been degraded, with the repeater amplifying a poor-quality signal having low throughput. It is also possible the indoor signal will be degraded to the point where it is incoherent, resulting in the repeater amplifying noise.

A window mounted satellite gateway system (also referred to herein as a window mounted Wi-Fi gateway system) for mitigating radio frequency (RF) signal degradation or attenuation experienced in an indoor environment without introducing interference that may attenuate or degrade outdoor RF signals has been developed. In some cases, a mobile network may provide an internet service via one or more satellites (e.g., high-speed internet service) via RF signals over a licensed or desired RF spectrum. For example, in some situations, building materials and structures, such as walls, may attenuate the RF signals. The attenuation may cause a degradation of mobile wireless service provided by a mobile network using RF technologies, particularly in the indoor environments. Such a window mounted Wi-Fi gateway system may include two paired units. The first unit may be configured for outdoor use, such as on the exterior of a window, and the second unit may be configured for indoor use, such as on the interior of the window. The outdoor unit may be aligned with the indoor unit, such that the units may communicate with each other via an optical transmission through the windowpane.

As previously noted, in implementations, the window mounted Wi-Fi gateway system may include two paired units. The first unit may be configured for outdoor use, such as on the exterior of a window, and the second unit may be configured for indoor use, such as on the interior of the window. The outdoor unit may be aligned with the indoor unit, such that the units may communicate with each other via an optical transmission through the windowpane. As an illustrative example, the outdoor unit may include one or more antennas and one or more wireless modem(s) for receiving and decoding the RF signals from one or more satellites. The system may convert the decoded RF signals into an optical-based signal that may be transmitted by a transmitter through the glass to an aligned or paired receiver in the indoor unit. The indoor unit may then convert the optical-based signal into a wired and/or wireless indoor signal which may be distributed throughout the indoor environment, via a router, to a user equipment (UE), e.g., such as a smart phone, a television, a smart appliance, a tablet, a personal computer, and the like associated with the user. The indoor unit may receive a wireless signal (such as a response signal) from the UE at the router within the indoor environment. The indoor unit may then convert the wireless signal to an optical-based signal and transmit through the windowpane back to a receiver in the outdoor unit. The outdoor unit may convert the optical-based signal to an RF signal and transmit or send the user's data packet to a destination via the one or more satellites.

In this manner, unlike conventional RF repeaters that amplify the RF signals that may interfere with the spectrum associated with satellite internet services and may reduce reception in outdoor environments, the window mounted Wi-Fi gateway system provides for indoor home network or modem services without interfering with outdoor performance of the one or more satellites.

Accordingly, as an example, a barrier mounted satellite terminal system comprises an outdoor unit configured to couple to an exterior surface of a transparent or translucent barrier. In configurations, the outdoor unit comprises a remote beam forming antenna (RBFA) unit for receiving a first signal from one or more satellites, a first wireless modem in electronic communication with the RBFA unit, the first wireless modem configured to decode the first signal, and a first transducer in electronic communication with the first wireless modem, the first transducer to transmit the first signal as a first optical signal. In the example, the barrier mounted satellite terminal system further comprises an indoor unit configured to couple to an interior surface of the transparent or translucent barrier. In configurations, the indoor unit comprises a second transducer physically aligned with the first transducer to receive the first optical signal from the first transducer through the transparent or translucent barrier, a second wireless modem in electronic communication with the second transducer, and a wireless antenna to transmit the first optical signal as a second signal to a user equipment.

In configurations, the wireless antenna is configured to receive a third signal from the user equipment and the indoor unit further comprises a third transducer to transmit the third signal as a second optical signal. In such configurations, the indoor unit further comprises a fourth transducer physically aligned with the third transducer to receive the second optical signal from the third transducer through the transparent or translucent barrier and the RBFA unit is configured to output the second optical signal as a fourth signal to the one or more satellites.

In configurations, the indoor unit further comprises a power supply electronically coupled to a power source a wireless power transmitter to output a wireless charging signal.

In configurations, the outdoor unit further comprises a wireless power receiver to capture power from the wireless charging signal and a power supply coupled to the wireless power receiver to store the power.

In configurations, the outdoor unit further comprises a heater.

In configurations, the RBFA unit further comprises at least one of a heater or a defroster.

In configurations, the indoor unit further comprises an auxiliary unit for encoding and decoding communication signals with an internet of things device in wireless communication with the indoor unit.

In configurations, the first transducer is a first optical coupler and the second transducer is a second optical coupler.

Certain implementations and embodiments of the disclosure will now be described more fully below with reference to the accompanying figures, in which various aspects are shown. However, the various aspects may be implemented in many different forms and should not be construed as limited to the implementations set forth herein. The disclosure encompasses variations of the embodiments, as described herein. Like numbers refer to like elements throughout.

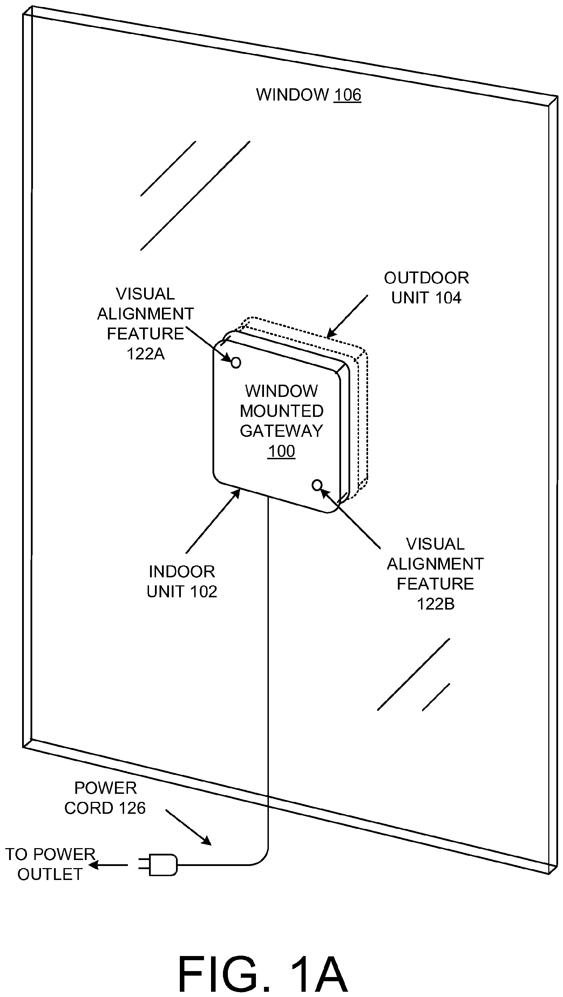

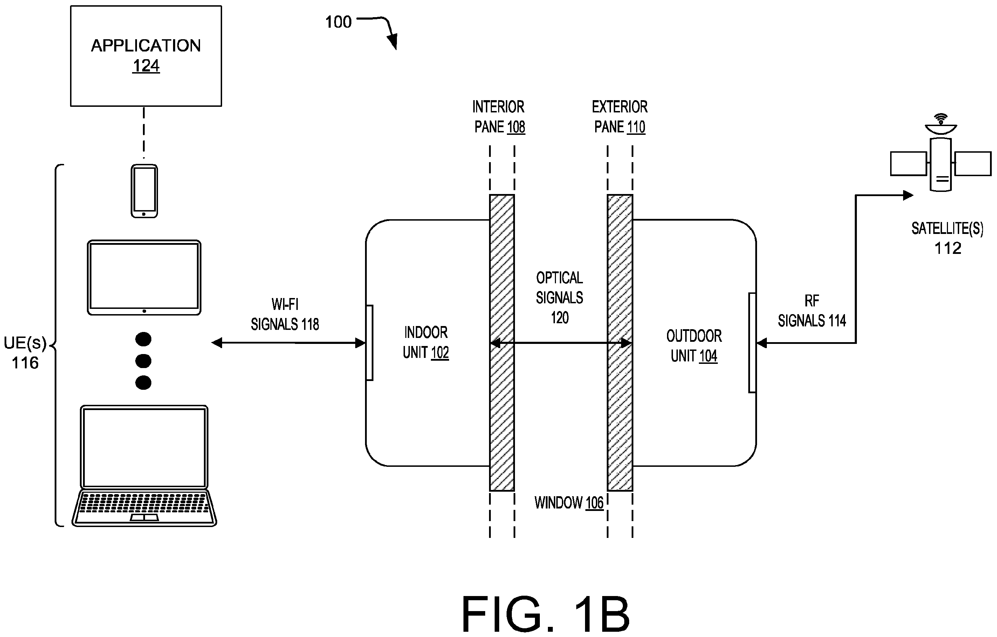

FIGs. 1A and 1B are schematically illustrate an example architecture for a barrier mounted satellite gateway or terminal, e.g., a window mounted satellite gateway or terminal (WMST) 100 according to some implementations. In the current example, the WMST 100 includes an indoor unit 102 and an outdoor unit 104. The indoor unit 102 and the outdoor unit 104 may be aligned on opposing sides (e.g., the interior and exterior, respectively) of a transparent or translucent barrier, e.g., a window 106 having one or more panes of glass, such as an interior pane 108 and an exterior pane 110 illustrated in the current example. Similarly, the satellite terminal may be mounted on some type of transparent or translucent barrier with opposing sides, in which the barrier includes one or more panes of glass and/or one or more panes of other transparent or translucent material. The alignment may be configured such that one or more transmitters operating in multiple frequency bands of the indoor unit 102 align with one or more receivers of the outdoor unit 104 and one or more receivers of the indoor unit 102 align with one or more transmitters of the outdoor unit 104. For instance, an optical receiver of the indoor unit 102 may align with an optical transmitter of the outdoor unit 104 and an optical receiver of the outdoor unit 104 may align with an optical transmitter of the indoor unit 102.

In the current example, the outdoor unit 104 may be in wireless communication with one or more satellites 112 providing high speed wireless internet services to a user. In this manner, the outdoor unit 104 may be configured to receive incoming data via RF signals 114 received from the one or more satellites 112 and to transmit outgoing data via RF signals 114 sent to the one or more satellites 112. Likewise, the indoor unit 102 may be in wireless communication with one or more UEs 116, such as smart phones, televisions, smart appliances, tablets, personal computers, and the like associated with the user. In this manner, the indoor unit 102 may be configured to receive outgoing data via wireless signals 118 received from the UEs 116 and to transmit incoming data via wireless signals 118 sent to the UEs 116. In configurations, the indoor unit 102 may include a power cord 126 for coupling the indoor unit 102 to a power source, e.g., a power outlet.

In configurations, the indoor unit 102 may include visual alignment features 122a, 122b that may be used with cooperating visual alignment features (not illustrated) on the outdoor unit 104 to aid the user in aligning the indoor unit 102 and the outdoor unit 104. In some cases, the alignment between the indoor unit 102 and the outdoor unit 104 may be configured to accommodate one or more coatings applied to the window 106 (e.g., a low-energy coating, tint, argon gas layer, or the like). In this manner, the system may be configured to provide an installation or set-up assistant, such as via a paired downloadable application (app) 124 on a UE 116. For instance, as one illustrative example, a user may apply or adhere the outdoor unit 104 to an exterior of a window 106 of their home environment.

In configurations, the user may download the application 124 to the UE 116. The user may also pair the application hosted on the UE 116 to the indoor unit 102 (such as over a home network, Bluetooth, or the like). The application 124 may provide the user with information, such as WMST guidance installation and optimization, performance statistics, and operational status of the WMST 100.

The application 124 may present an alignment graphic or interface on a display of the UE 116 that may assist with aligning the indoor unit 102 with the outdoor unit 104. For example, the interface may include a cursor or pointer that represents the indoor unit 102 that may move on the interface as the user moves the indoor unit 102. The interface may also present a target that represents the outdoor unit 104. In this manner, the user may move the cursor to the target by moving the indoor unit 102 with respect to the window 106 and the outdoor unit 104. The interface may, upon proper alignment (e.g., signal received and/or sent between the indoor unit 102 with the outdoor unit 104 greater than one or more thresholds), display an aligned indicator (such as a green indicator) to inform the user to adhere the indoor unit 102 to the window 106 at the current alignment. In this manner, the system may accommodate alignment that may be more complicated than aligning the exteriors of the two units 102 and 104, such as caused by any optical transmission interference that occurs due to coatings, gasses, tinting and the like.

Thus, in configurations, the application 124 may provide a user an interface to guide the window mounted satellite terminal's installation. The application 124 as described herein may assist the user in managing the window mounted satellite terminal 100, as well as assist the user in monitoring the window mounted satellite terminal's performance and status.

More particularly, the application 124 may determine the window mounted satellite terminal's installation status. For example, the application 124 may determine a power status of the indoor unit 102, e.g., is the indoor unit 102 powered or unpowered. The application 124 may determine an indoor unit 102 operating status, e.g., the indoor unit 102 status is good, or the indoor unit 102 has failed (as reported from a self-test by the indoor unit 102). The application 124 may determine an indoor unit mode. For example, the indoor unit 102 may be searching for the outdoor unit 104, e.g., the indoor unit 102 is looking for its outdoor unit partner. The application 124 may determine that the indoor unit 102 has detected an outdoor unit, e.g., outdoor unit 104, and may also indicate that connection with the outdoor unit 104 has been successful. The application 124 may determine that the indoor unit 102 connection quality with the outdoor unit 104 is poor, good (acceptable), excellent, etc. based on a one or more quality metrics, such as a received signal strength measurement, a data throughput measurement, etc.

In configurations, the application 124 may determine the window mounted satellite terminal's connectivity to narrow band Internet of Things (NB-IoT) devices. For example, the application 124 may determine any narrow band Internet of Things devices to which the window mounted satellite terminal 100 is connected. The application 124 may determine status of the NB-IOT devices.

In configurations, the application 124 may configure the window mounted satellite terminal 100 for alerts. For example, the application 124 may configure the window mounted satellite terminal 100 to receive network broadcast alerts for the area around the window mounted satellite terminal 100, e.g., weather alerts, safety alerts, emergency alerts, hazard alerts, etc. The application 124 may also configure the window mounted satellite terminal 100 to receive commercial announcements. These alerts and announcements may come over the one or more satellites 112 or merely among a cluster of WMSTs 100 that are connected locally from any of their sensors that may be implemented, i.e., to minimize additional traffic load on the one or more satellites 112 or if the one or more satellites 112 becomes unavailable.

In configurations, the application 124 may manage the window mounted satellite terminal's functionality. For example, the application 124 may cause the WMST 100 to attach (e.g., initiate a communication connection) or detach (e.g., terminate a communication connection) from the one or more satellites 112. The application 124 may also initiate a WMST reset to restore the hardware and/or software of the WMST 100 to one or more corresponding factory settings. The application 124 may also initiate a WMST self-test that executes a self-diagnostic function of the WMST 100 to detect potential software and/or hardware faults of the WMST 100. When the WMST 100 is hosting connectivity to other window mounted satellite terminals for ancillary functions, the application 124 may cause the window mounted satellite terminal to opt-in or opt-out of a role of relay. For example, the application 124 may cause the WMST 100 to opt-in or opt-out of car-to-car relay messages/data, public safety, delivery services, local area network, sensing/monitoring of microclimates, etc. The application 124 may assist the WMST 100 with NB-IoT device management, e.g., set heating/cooling thermostat, timer for sprinklers, security alarm, lock/unlock entry ways, etc. Branch menus may be included depending on the NB-IoT range of functionalities. The application 124 may assist the WMST 100 in opting-in or opting-out of receiving broadcast alerts.

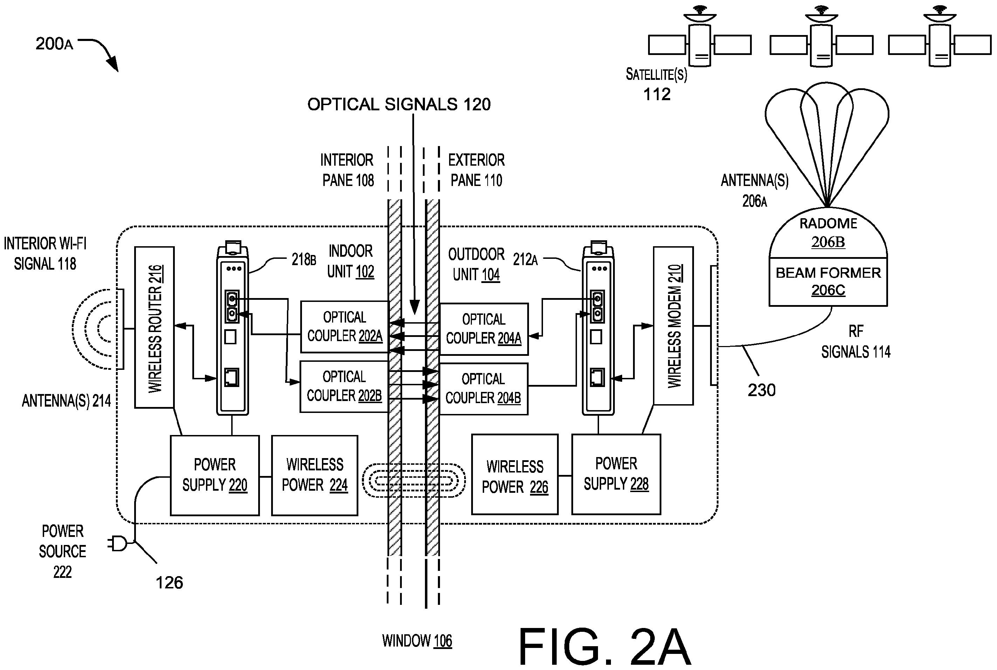

FIG. 2A is an example block diagram of an architecture for a window mounted satellite gateway or terminal (WMST) 200a according to some implementations. In the current example, the WMST 200a includes the indoor unit 102 and the outdoor unit 104. As previously described, the indoor unit 102 and the outdoor unit 104 may be aligned (as described with respect to FIGs. 1A and 1B) on opposing sides (e.g., the interior and exterior, respectively) of the window 106 having one or more panes of glass (such as the interior pane 108 and the exterior pane 110 illustrated in the current example).

The alignment may be configured such that a first optical coupler 202a (or transducer, collimator, or the like) of the indoor unit 102 aligns with a first optical coupler 204a (or transducer, collimator, or the like) of the outdoor unit 104, such that data in the form of optical signals 120 may be transmitted from the first optical coupler 204a of the outdoor unit 104 to the first optical coupler 202a of the indoor unit 102. Likewise, a second optical coupler 202b of the indoor unit 102 aligns with a second optical coupler 204b of the outdoor unit 104, such that data in the form of optical signals 120 may be transmitted from the second optical coupler 202b of the indoor unit 102 to the second optical coupler 204b of the outdoor unit 104. For instance, the optical couplers 204a and 202b may output the data as an optical-based signal 120 that may be received by the optical couplers 202a and 204b, respectively. While FIG. 2A illustrates two optical coupler pairs (202a, 204a; 202b, 204b), it is to be understood that the example of FIG. 2A may include only one optical coupler pair or may include more than two optical coupler pairs.

The outdoor unit 104 may also include a remote beam forming antenna unit (RBFA) 206 that includes an antenna array aperture directed at the sky. The RBFA 206 may be coupled to the outdoor unit 104 by one or more cable(s) 230 that may provide power and/or data between the RBFA 206 and the outdoor unit 104. The RBFA 206 may be coupled to one or more wireless modem(s) 210 and/or small form-factor pluggable (SFP) media converter 212a. The wireless modem 210 may be configured to decode the RF signals received by the RBFA 206 (e.g., the satellite transmission broadcast, for instance, from the one or more satellites 112). The wireless modem 210 and/or SFP media converter 212a may be in electronic communication with the optical couplers 204a and 204b. In configurations, the RBFA 206 may include the wireless modem 210.

In the current example, the RBFA 206 may include one or more beam forming antenna(s) 206a coupled to a radome 206b of the RBFA 206 that may direct the coverage of the system in a desired direction or configuration with respect to the one or more satellites 112. The RBFA 206 may include a beam former 206c that includes hardware and software to receive as well as transmit over the air to/from the one or more satellite(s) 112 passing overhead with optimally steered beam(s) for communication. The RBFA 206 may include, but is not limited to, RF power amplifiers, signal detectors, signal modulators/demodulators, base band units, modem, and a power supply. The RBFA 206 may also contain a heater and defroster to maintain operational temperature for the electronics, as well as to keep the antenna radome free of snow and ice.

In the current example, the one or more antenna(s) 206a may be configured to provide beam forming to improve signal reception and/or transmission with respect to omnidirectional antenna responses and the RF signals 114. In some cases, the one or more antenna(s) 206a may include multiple antennas that are configured to have adjustable phase and amplitude to generate beam or focused area of coverage. In the focused area of coverage, the one or more antenna(s) 206a may provide increased signal strength and/or range, improved signal quality, and otherwise enhanced network capabilities. In these examples, the one or more antenna(s) 206a may be adjusted to have a beam shaped in the direction of a satellite.

In configurations, the outdoor unit 104 may also contain a heater or fan for maintaining temperature for a proper operational environment.

The indoor unit 102 may include one or more antenna(s) 214 positioned with respect to an antenna aperture. The antenna(s) 214 may be coupled to a wireless router 216. The wireless router 216 of the indoor unit 102 may be configured to decode the interior Wi-Fi signals 118 received by the antenna(s) 214 from, for instance, a UE within the interior environment. The wireless router 216 may be in electronic communication with the optical couplers 202a and 202b.

In the current example, the indoor unit 102 may include a SFP converter 218a (such as a media converter or the like) to decode and/or translate optical signals 120 received from the optical coupler 202a to interior Wi-Fi signals 118 (such as representative of media files) and/or signals (such as representative of media files) prior to delivering to the wireless router 216. Likewise, the outdoor unit 104 may include the SFP converter 212a (such as a media converter or the like) to decode and/or translate optical signals 120 based on RF signals 114 (such as representative of media files) and/or signals (such as representative of media files) received from the optical coupler 204b.

Additionally, in the current example, the SFP converter 218a of the indoor unit 102 may encode and/or translate the interior Wi-Fi signals 118 (such as representative of media files) and/or signals (such as representative of media files) to optical signals 120 prior to delivering to the optical coupler 202b. Likewise, the SFP converter 212a of the outdoor unit 104 may encode and/or translate the RF signals 114 (such as representative of media files) and/or signals (such as representative of media files) to optical signals 120 prior delivering to the optical coupler 204a.

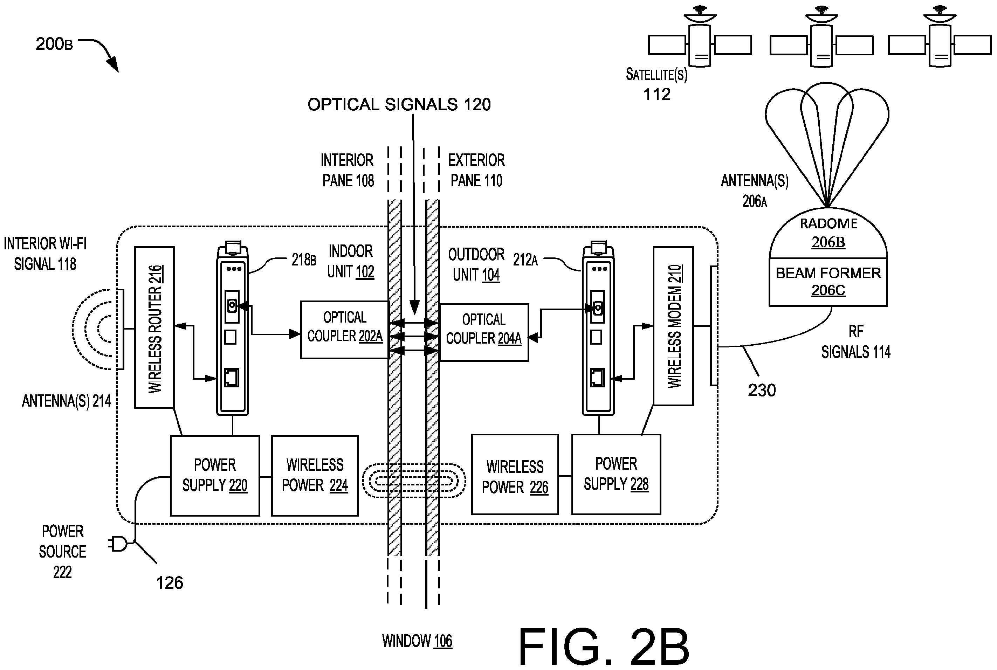

FIG. 2B is another example block diagram of an architecture for a window mounted satellite gateway or terminal (WMST) 200b according to some implementations. The WMST 200b is similar to the WMST 200a of FIG. 2A. However, the example WMST 200a of FIG. 2A includes simplex SFP converters 212a and 218a. The example WMST 200b of FIG. 2B includes bi-directional SFP converters 212a and 218b. This may allow for fewer optical couplers, e.g., only optical couplers 202a and 204a may be needed. Using only optical couplers 202a and 204a may also allow for much easier alignment of the indoor unit 102 and the outdoor unit 104 since only one pair of optical couplers, e.g., optical couplers 202a and 204a, need to be aligned.

As described with respect to FIGs. 2A and 2B, the indoor unit 102 may also include a power supply 220 that may be coupled (via, e.g., the power cord 126) to a power source 222 (such as an outlet in the interior environment). The power supply 220 may provide power to the indoor unit 102 and act as a power source for the outdoor unit 104. For instance, the power supply 220 may be coupled to a wireless power transmitter 224 to output a power signal such as an inductive power supply signal. The outdoor unit 104 may be equipped with a wireless power receiver 226 that may be charged by or capture the inductive power supply signal. The wireless power receiver 226 may be coupled to a power supply 228 of the outdoor unit 104. In implementations, the wireless power transmitter 224 and wireless power receiver 226 may be in the form of cooperating coils. The power supply 228 may provide power to the RBFA 206 via the one or more cable(s) 230. The indoor unit 102 may include a housing cover and the outdoor unit 104 may include a housing cover.

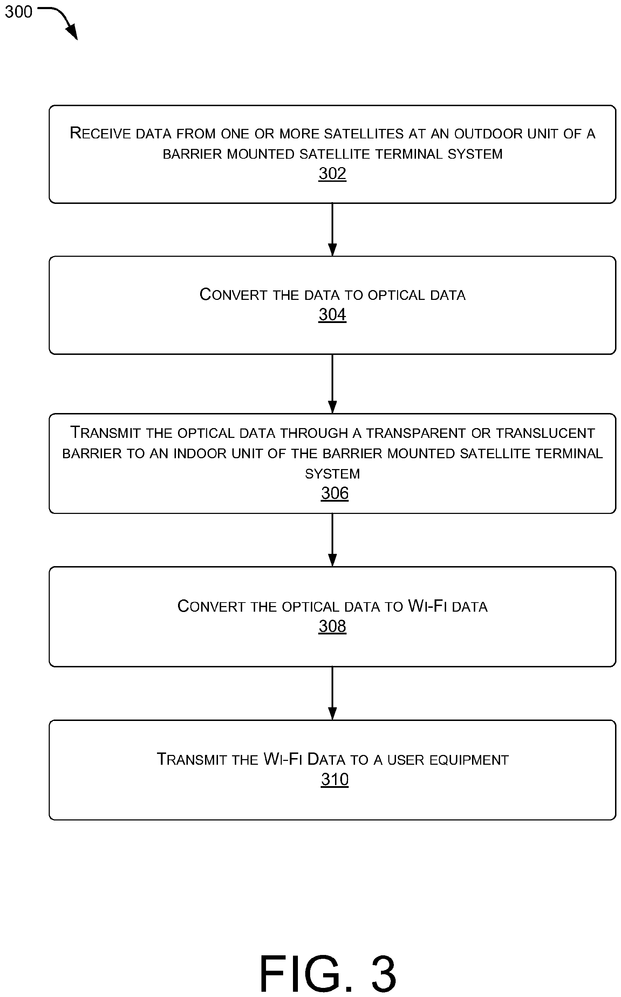

FIGS. 3-5 are flow diagrams illustrating example processes associated with the barrier mounted satellite terminal systems discussed herein. The processes are illustrated as a collection of blocks in a logical flow diagram, which represent a sequence of operations, some or all of which can be implemented in hardware, software, or a combination thereof. In the context of software, the blocks represent computer-executable instructions stored on one or more computer-readable media that, when executed by one or more processor(s), performs the recited operations. Generally, computer-executable instructions include routines, programs, objects, components, encryption, deciphering, compressing, recording, data structures and the like that perform particular functions or implement particular abstract data types.

The order in which the operations are described should not be construed as a limitation. Any number of the described blocks can be combined in any order and/or in parallel to implement the processes, or alternative processes, and not all of the blocks need be executed. For discussion purposes, the processes herein are described with reference to the frameworks, architectures and environments described in the examples herein, although the processes may be implemented in a wide variety of other frameworks, architectures or environments.

FIG. 3 is a flow diagram illustrating an example process 300 associated with receiving data from one or more satellites according to some implementations. In the current example, a barrier mounted satellite terminal system may include an indoor unit mounted on an interior of a transparent or translucent barrier, e.g., a window, and an exterior unit mounted on the exterior of the transparent or translucent barrier. The indoor and outdoor units may be aligned such that the units may send and receive data from each other through the transparent or translucent barrier, e.g., windowpanes of the window. Accordingly, unlike conventional repeaters, the barrier mounted satellite gateway system extends the satellite internet coverage indoors without introducing interference in the outdoor environment.

At 302, the barrier mounted satellite terminal system may receive data from one or more satellites at an outdoor unit of the barrier mounted satellite terminal system. For instance, in the current example, the barrier mounted satellite terminal system may receive RF signals containing or encoding data and/or packets transmitted from the one or more satellites. The data received may be intended for a UE within a building associated with the barrier mounted satellite gateway system that the RF signals may fail to reliably penetrate.

At 304, the outdoor unit of the barrier mounted satellite terminal system may convert the data to optical data. For example, the outdoor unit may include one or more transmitters, such as an optical coupler, that may transmit an optical signal through the transparent or translucent barrier to the indoor unit. In this manner, the system may convert the RF signals received to digital data packets that may be encoded and/or transmitted as optical signals by one or more optical couplers.

At 306, the outdoor unit may transmit the optical data through the transparent or a translucent medium (e.g., a window) associated with the barrier mounted satellite terminal system to the indoor unit of the barrier mounted satellite terminal system. In some cases, the outdoor unit and the indoor unit may be configured and/or aligned in a manner such that any gases, coatings, tints, or the like fail to cause in disruption in the optical data delivery.

At 308, the indoor unit may convert the optical data to Wi-Fi data. for example, the indoor unit may receive the optical data and convert the optical data back to a digital signal.

At 310, the indoor unit may transmit or output the Wi-Fi data to the UE. For example, a router and/or antenna may be configured to output the Wi-Fi data as a wireless signal over a coverage area (such as the interior of the physical environment associated with the barrier mounted satellite terminal system). The UE may then receive and decode the Wi-Fi data as configured with respect to internet data.

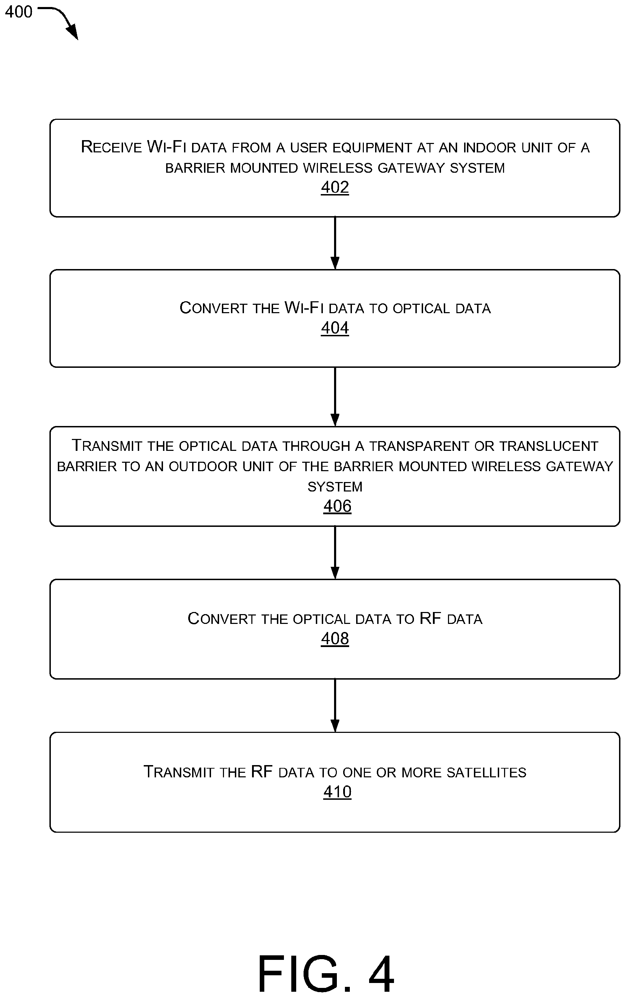

FIG. 4 is a flow diagram illustrating an example process 400 associated with sending data to a network according to some implementations. In the current example, a barrier mounted satellite terminal system may include an indoor unit mounted on an interior of a transparent or translucent barrier, e.g., a window and an exterior unit mounted on the exterior of the transparent or translucent barrier. The indoor and outdoor units may be aligned such that the units may send and receive data from each other through the transparent or translucent barrier, e.g., the windowpanes of the window. Accordingly, unlike conventional repeaters the barrier mounted satellite terminal system extends the internet coverage indoors without introducing interference in the outdoor environment.

At 402, the barrier mounted satellite terminal system may receive Wi-Fi data from a UE at an indoor unit of the barrier mounted satellite terminal system. For instance, in the current example, the barrier mounted satellite terminal system may receive wireless signals containing or encoding data and/or packets transmitted from the UE to be delivered to the network or a third-party system via the one or more satellites.

At 404, the indoor unit of the barrier mounted satellite terminal system may convert the Wi-Fi data to optical data. For example, the indoor unit may include one or more transmitters, such as an optical coupler, that may transmit an optical signal through the transparent or translucent barrier to the indoor unit. In this manner, the system may convert the Wi-Fi signals received to digital data packets that may be encoded and/or transmitted as optical signals by one or more optical couplers.

At 406, the indoor unit may transmit the optical data through the transparent or translucent barrier associated with the barrier mounted satellite terminal system to an outdoor unit of the barrier mounted satellite terminal system. In some cases, the outdoor unit and the indoor unit may be configured and/or aligned in a manner such that any gases, coatings, tints, or the like fail to cause a disruption in the optical data delivery.

At 408, the outdoor unit may convert the optical data to RF data. For example, the outdoor unit may receive the optical data and convert the optical data back to a digital signal.

At 410, the outdoor unit may transmit or output the RF data to the one or more satellites. For example, a modem and/or antenna may be configured to output the RF data as RF signals to one or more satellites.

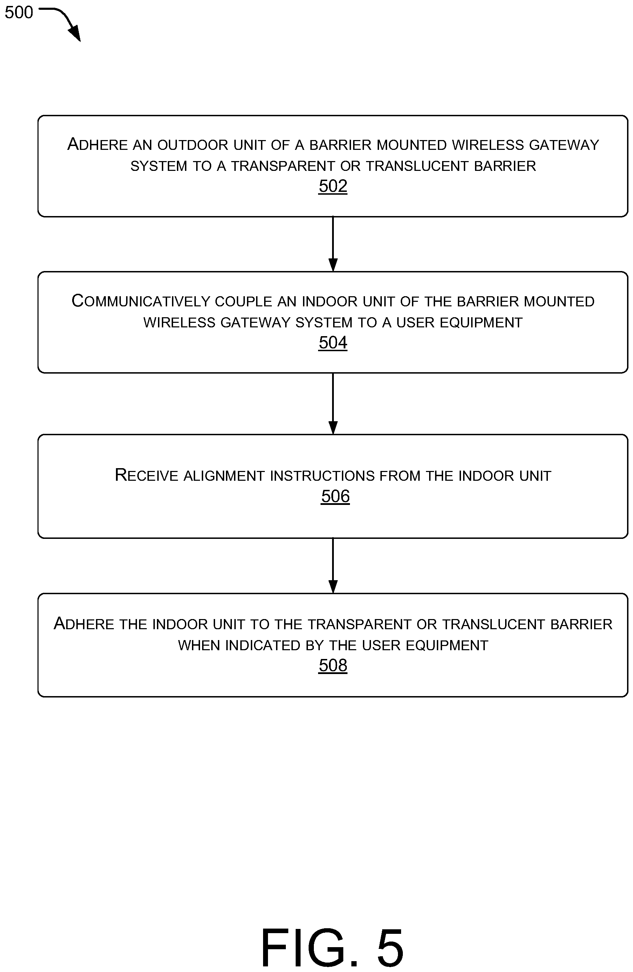

FIG. 5 is a flow diagram illustrating an example process 500 associated with configuring or installing the barrier mounted satellite terminal system according to some implementations. For example, the indoor and outdoor units of the barrier mounted satellite terminal may be aligned prior to use such that the optical signal transmitted from one unit to the other may be received with a threshold level of reliability and the wireless power signal may be adequately enabled to charge and power the outdoor unit during use.

At 502, a user may adhere or otherwise attach an outdoor unit of the barrier mounted satellite terminal system to a transparent or translucent barrier of a building, such as their home or office. In some cases, the user may remove a protective layer from the back of the outdoor unit which may expose a layer of adhesive which may be used to couple the outdoor unit to the transparent or translucent barrier.

At 504, the user may communicatively couple an indoor unit of the barrier mounted satellite terminal system to a UE. For example, the system may be powered and activated to provide a local area network to which the UE may connect.

At 506, the UE may receive alignment instructions from the indoor unit as the indoor unit is moved with respect to the outdoor unit. In some cases, the indoor and outdoor unit may attempt to send data via the optical transmitters and receivers until the signal quality is above a desired threshold for each pair of transmitters and receivers. The indoor unit may provide feedback via the UE to the user as the signal quality improves or degrades as the indoor unit is moved. In this manner, the UE may assist with guiding the user to properly align the indoor unit with respect to the outdoor unit.

At 508, the user may adhere the indoor unit to the transparent or translucent barrier when indicated by the UE. For example, when the indoor unit is properly aligned with the outdoor unit, the indoor unit may cause the UE to display an indication to the user that the indoor unit is properly aligned and should be coupled to the transparent or translucent barrier at the current location/position.

While the example clauses described above are described with respect to one particular example implementation, it should be understood that, in the context of this document, the content of the example clauses can also be implemented via a method, device, system, a computer-readable medium, and/or another implementation. Additionally, any of examples may be implemented alone or in combination with any other one or more of the other examples.

## Claims

1. A barrier mounted satellite terminal system comprising:
an outdoor unit configured to couple to an exterior surface of a transparent or translucent barrier, the outdoor unit comprising:
a remote beam forming antenna, RBFA, unit for receiving a first signal from one or more satellites;
a first wireless modem in electronic communication with the RBFA unit, the first wireless modem configured to decode the first signal; and
a first transducer in electronic communication with the first wireless modem, the first transducer to transmit the first signal as a first optical signal;
an indoor unit configured to couple to an interior surface of the transparent or translucent barrier, the indoor unit comprising:
a second transducer physically aligned with the first transducer to receive the first optical signal from the first transducer through the transparent or translucent barrier;
a second wireless modem in electronic communication with the second transducer; and
a wireless antenna to transmit the first optical signal as a second signal to a user equipment.

2. The barrier mounted satellite terminal system of claim 1, wherein:
the wireless antenna is configured to receive a third signal from the user equipment; and
the indoor unit further comprises a third transducer to transmit the third signal as a second optical signal;
the outdoor unit further comprises a fourth transducer physically aligned with the third transducer to receive the second optical signal from the third transducer through the transparent or translucent barrier; and
the RBFA unit is configured to output the second optical signal as a fourth signal to the one or more satellites.

3. The barrier mounted satellite terminal system of claim 1 or 2, wherein the indoor unit further comprises:
a power supply electronically coupled to a power source; and
a wireless power transmitter to output a wireless charging signal.

4. The barrier mounted satellite terminal system of claim 3, wherein the outdoor unit further comprises:
a wireless power receiver to capture power from the wireless charging signal; and
a power supply coupled to the wireless power receiver to store the power.

5. The barrier mounted satellite terminal system of any preceding claim, wherein the indoor unit further comprises an auxiliary unit for encoding and decoding communication signals with an internet of things device in wireless communication with the indoor unit.

6. The barrier mounted satellite terminal system of claim 1, wherein the first transducer is a first optical coupler and the second transducer is a second optical coupler.

7. An outdoor unit of a barrier mounted satellite terminal system comprising:
a remote beam forming antenna unit, RBFA, unit for sending and receiving radio frequency signals associated with one or more satellites;
a wireless modem in electronic communication with the RBFA unit, the wireless modem configured to decode the radio frequency signals; and
a first transducer in electronic communication with the wireless modem and optical communication with an indoor unit of the barrier mounted satellite terminal system.

8. The outdoor unit of claim 7, further comprising a wireless power receiver to capture power from a wireless charging signal and a power supply coupled to the wireless power receiver.

9. The outdoor unit of claim 7 or 8, wherein the RBFA unit comprises two or more antennas and wherein the two or more antennas are configured to utilize beamforming with respect to sending and receiving the radio frequency signals associated with the one or more satellites.

10. The barrier mounted satellite terminal system of claim 1 or the outdoor unit of claim 7, wherein the outdoor unit further comprising a heater.

11. The barrier mounted satellite terminal system of claim 1 or the outdoor unit of claim 7, wherein the RBFA unit further comprises at least one of a heater or a defroster.

12. The outdoor unit of any of claims 7 to 9, further comprising a second transducer in electronic communication with the wireless modem and optical communication with the indoor unit of the barrier mounted satellite terminal system.

13. An indoor unit of a barrier mounted satellite terminal system comprising:
an antenna for sending and receiving wireless signals associated with a user equipment, wherein the wireless signals are based at least in part on signals from a remote beam forming antenna unit, RBFA, of an outdoor unit of the barrier mounted satellite terminal system;
a wireless modem in electronic communication with the antenna, the wireless modem configured to decode the wireless signals; and
a first transducer in electronic communication with the wireless modem and optical communication with an outdoor unit of the barrier mounted satellite terminal system.

14. The indoor unit of claim 13, further comprising a power supply coupled to a power source and a wireless power transmitter, the wireless power transmitter to generate a wireless charging signal.

15. The indoor unit of claim 13 or 14, further comprising a second transducer in electronic communication with the wireless modem and optical communication with the outdoor unit of the barrier mounted satellite terminal system.
